# EUROPEAN PATENT APPLICATION

(11) **EP 2 383 451 A2**
(43) Date of publication of application: **02.11.2011**
(21) Application number: 11163637.9
(22) Date of filing: 26.04.2011
(51) Int. Cl.: F02C 3/20, F02C 3/30, F02C 7/232, F23R 3/36

(54) **Alternate method for diluent injection for gas turbine NOx emissions control**

(30) Priority: 29.04.2010 US 770065
(71) Applicant: General Electric Company, Schenectady, NY 12345 (US)
(72) Inventor: Lawson, William James, Schenectady, NY 12345 (US); Rodriguez, Carlos Andres, Schenectady, NY 12345 (US); Slobodanskiy, Ilya Aleksandrovich, Greenville, SC 29615 (US); Coffey, Daniel Robert, Schenectady, NY 12345 (US); Blaisdell, Michael Wayne, Greenville, SC 29615 (US)
(74) Representative: Gray, Thomas

(57) **Abstract**

A method and system for gas turbine emissions management through delivery of a diluent fluid stream (105) (steam, CO2, N2 etc) into a gas turbine combustors (40) while operating on a conventional fuel such as light distillate oil or natural gas. The diluent injection system (100) delivers required diluent-to-fuel ratios over the emissions compliance operating range of the gas turbine. The method for diluent injection is coupling a secondary fuel path (150) to a gas turbine compressor discharge purge system (140), such that the diluent (105) is mixed with compressor discharge air (70). The mixed compressor discharge purge air and flow of diluent (105) are injected into the gas turbine combustor 40 through a non-fueled combustion fuel nozzle passage (42) to achieve emissions guarantee compliance.

## Description

### BACKGROUND OF THE INVENTION

The invention relates generally to gas turbines and more specifically to injection of diluents into a combustor of the gas turbine.

The regulatory environment for low emissions from gas turbine power plants has increased significantly in recent years. Environmental agencies throughout the world are now requiring even lower rates of emissions of NO_{X} and other pollutants from both new and existing gas turbines. Dry Low NO_{X} gas turbines have been developed and are successful at reducing NO_{X} emissions. Non-dry low NO_{X} types of gas turbine combustion systems have employed injection of steam, water, and gaseous diluents into the combustors of gas turbines for reducing NO_{X} emissions.

Gas turbine combustors bum fuel in air to create hot exhaust gases that are passed through stages of stationary nozzles and movable blades driving the rotor of the turbine to generate rotational power for producing electricity or operating mechanical equipment. Multiple combustors may supply the hot exhaust gases to the turbine stages. Fuel is generally provided through a backplate of each individual combustor to a combustion zone via dedicated fuel nozzles. Often both a primary fuel path and a secondary fuel path are provided to the combustors. The primary fuel path may be used, for example, to supply a high-energy fuel, such as natural gas or distillate oil, to the combustors. The secondary fuel path may supply a low energy fuel, such as synthetic gas or process gas, to the combustors. Each of the primary fuel path and the secondary fuel path may include a header with flexible fluid connectors that direct flow to each individual combustor. The flow from each fuel path may pass through one or more dedicated injection nozzles into the combustor. Some combustors may also include dedicated injection points for injecting the diluents into the combustor for NO_{X} emissions control. Other combustors do not provide a dedicated interface for diluent injection, so therefore provide greater than desirable NO_{X} emissions.

Accordingly, it would be desirable to utilize diluents for control of emissions in gas turbine exhaust for gas turbine systems that do not provide dedicated injection points for diluents into the combustor of the gas turbine.

### BRIEF DESCRIPTION OF THE INVENTION

Briefly in accordance with one aspect of the present invention, a method is provided for injecting a diluent into a combustor for a gas turbine that includes a first fuel injection path and a second fuel injection path, to the combustor but does not include a dedicated diluent injection point in the combustor. The method includes providing a diluent flow control system and connecting the diluent flow control system to a second fuel injection path when the first fuel injection path is supplying fuel to the combustor and the second fuel injection path is not fueled. The method also includes preparing the diluent flow control system to inject the diluent into the second fuel injection path, and injecting diluent from the diluent control system through the second fuel injection path to the combustor.

In accordance with a second aspect of the present invention, a system is provided for injecting a diluent into a combustor for a gas turbine where a first fuel injection path and a second fuel injection path to the combustor are provided but a dedicated diluent injection path or nozzle to the combustor is not available. The system includes a control system for diluent injection into the combustor of a gas turbine, a first fuel injection path for a conventional fuel to a first inlet on the combustor and a second fuel injection path for a secondary fuel to a second inlet on the combustor. A fluid connection between the control system for diluent injection and the second fuel injection path through to the combustor is provided.

### BRIEF DESCRIPTION OF THE DRAWING

These and other features, aspects, and advantages of the present invention will become better understood when the following detailed description is read with reference to the accompanying drawings in which like characters represent like parts throughout the drawings, wherein:
FIG. 1 illustrates a prior art fuel system for fuel flow to combustors for a gas turbine;
FIG. 2 illustrates an aft section for a typical combustor without a dedicated diluent manifold;
FIG. 3 illustrates a first embodiment of a gaseous diluent injection system for supplying a gas turbine combustor through a secondary fuel path via a compressor discharge purge system;
FIG. 4 illustrates a second embodiment of a gaseous diluent injection system for supplying a gas turbine combustor through a secondary fuel path via a compressor discharge purge system
FIG. 5 illustrates a first embodiment of a steam diluent injection system for supplying a gas turbine combustor through a secondary fuel path via a compressor discharge purge system;
FIG. 6 illustrates a second embodiment of a steam diluent injection system for supplying a gas turbine combustor through a secondary fuel path via a compressor discharge purge system;
FIG. 7 illustrates a diluent injection system that includes a gaseous diluent control system and a steam diluent control system that may be fluidly connected in parallel to the compressor discharge purge air piping for supplying diluents to the combustors of the gas turbine through the secondary fuel path; and
FIG. 8 illustrates a flow chart of a method for supplying a diluent to combustors of a gas turbine for a gas turbine system that does not supply a dedicated diluent flow path to the combustors.

### DETAILED DESCRIPTION OF THE INVENTION

The following embodiments of the present invention have many advantages, including providing a new method for gas turbine emissions management through delivery of a diluent fluid stream (steam, CO2, N2 etc) into a gas turbine combustion system while the gas turbine is operating on a conventional fuel such as light distillate oil or natural gas. The diluent injection system is capable of delivering required diluent-to-fuel ratios over the guaranteed emissions compliance operating range of the gas turbine. The method for diluent injection is coupling the injection system to a gas turbine compressor discharge purge system, such that the diluent fluid is mixed with compressor discharge air. The mixed compressor discharge purge air and diluent stream are injected into the gas turbine combustor through an inactive (non-fueled) combustion fuel nozzle passage to achieve emissions guarantee compliance.

The inventive approach for providing diluent to the combustor has many technical advantages. Use of existing design system fluid paths provides for simplicity of design. Use of existing entry points into the combustor eliminates the need for development and testing of a combustor with a dedicated diluent injection passage. Lack of a requirement for a dedicated diluent injection-piping manifold eliminates complexity associated with backfit of additional piping on an existing system. The inventive design also provides commercial advantages of cost savings in eliminating the need for the dedicated diluent injection piping manifold and reducing outage time for more extensive modifications.

The applicability of existing combustor designs is extended, as the base design of the combustor does not include a dedicated diluent injection passage. Further, the inventive approach enables the existing core product to be applied to a larger range of applications where diluent injection is required when the turbine is operating on a conventional fuel

Prior art has utilized a dedicated diluent injection valve, piping, piping manifold and dedicated combustor passage for injecting a diluent fluid or has not employed diluents for gas turbine NO_{X} emissions control. With embodiments of the inventive arrangement, diluent fluid (steam, N2, CO2 etc) is delivered through a series of pressure control and control valves. Inlet pressure to the control valve may be managed by a pressure control valve to allow the control valve to operate in a choked flow condition. Such a choked flow condition allows the flow control valve to provide flow control less susceptible to variation due to downstream pressure variation.

The discharge of the diluent flow control valve is tied into an existing compressor discharge purge fluid stream. The compressor discharge purge fluid stream may actively purge a secondary fuel path through to a secondary fuel nozzle of the combustor when the secondary fuel is not being supplied to the combustor. Such a secondary fuel path may be provided for a low energy fuel, such as synthetic gas or process gas. A diluent flow meter is used in conjunction with the conventional fuel flow measurement to set the correct proportion of diluent-to-fuel ratio required for gas turbine emissions control (NOx).

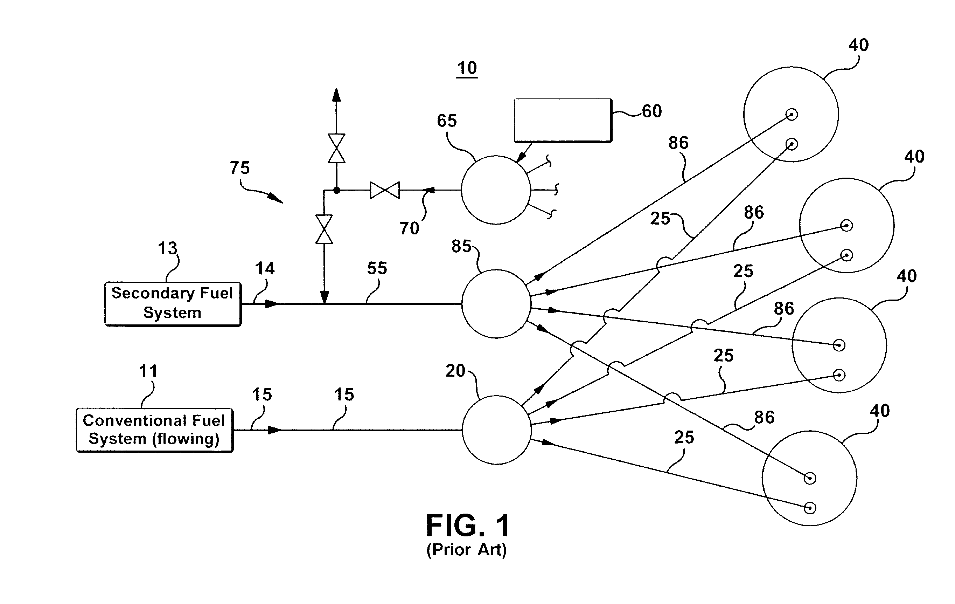

FIG. 1 illustrates a prior art fuel system 10 for fuel flow to combustors for a gas turbine. A conventional fuel system 11 supplies a conventional fuel 12, such as distillate oil or natural gas. The conventional fuel and fuel system may also be referred to as a primary fuel and primary fuel system. The conventional fuel 12 passes through conventional fuel path 15 to conventional fuel header 20 where flexible fluid connectors 25 distribute the conventional fuel to multiple combustors 40. A secondary fuel system 13 supplies a secondary fuel 14, such as synthetic gas or process gas. The secondary fuel 14 may be supplied through a secondary fuel path 55 to secondary fuel header 85 where flexible fluid connectors 86 distribute the fuel to multiple combustors 40. Either the conventional fuel 12 or the secondary fuel 14 may be used.

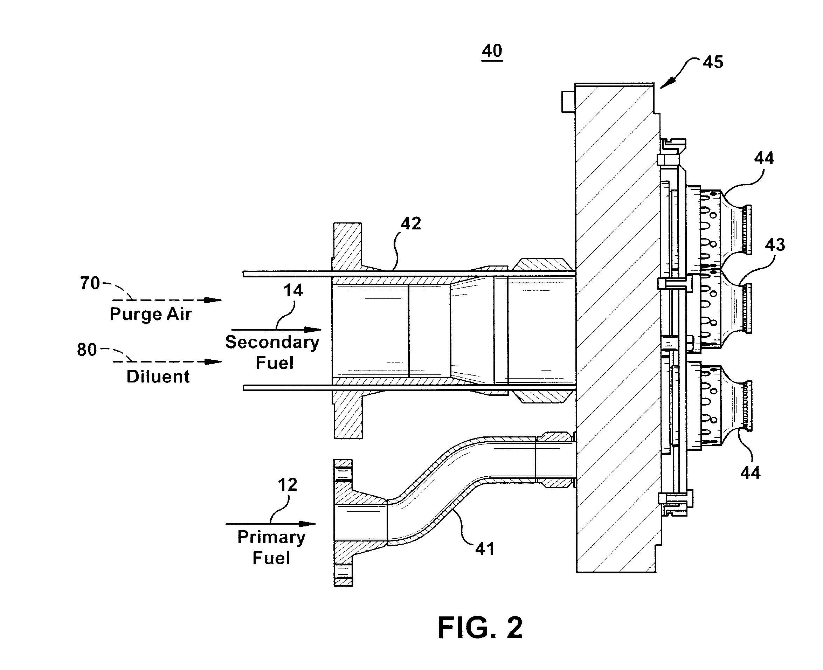

Compressed air is supplied from gas turbine compressor 60 to combustors (not shown) as part of the normal combustion process. Compressed air from gas turbine compressor 60 may further be supplied through purge air system piping 75 to the secondary fuel path 55. When the secondary fuel 14 is isolated and not supplying the combustors 40, compressed air 70 from the compressor discharge manifold 65 is lined up to flow through the secondary fuel path 55, the secondary fuel header 85 and individual flexible fluid connectors 86 to the combustors 40. The purge air 65 flows to secondary fuel nozzle(s) 44 (FIG. 2) for cooling and for preventing flame in the combustor from backing up through the secondary fuel nozzle(s).

FIG. 2 illustrates an aft section for a typical combustor 40 that does not include a dedicated diluent manifold. A primary fuel inlet 41 and a secondary fuel inlet 42 are connected to the backplate 45 of the combustor. The backplate 45 includes multiple and complex internal paths (not shown) to feed fuel to nozzles on the downstream side for mixing with an air supply (not shown) and injection into a downstream combustion zone (not shown). Many different arrangements of the nozzles may be provided, but for example an inner ring of nozzles 43 may be supplied when the primary fuel is used and an outer ring of nozzles 44 may be supplied when the secondary fuel is used. No provision exists for a separate path into the combustor 40 for diluent injection. Using the inventive method, diluent 80 may pass along with the purge air 70 through the secondary fuel inlet 42 into the combustor, when primary fuel 12, but not secondary fuel 14 is being supplied to the combustor.

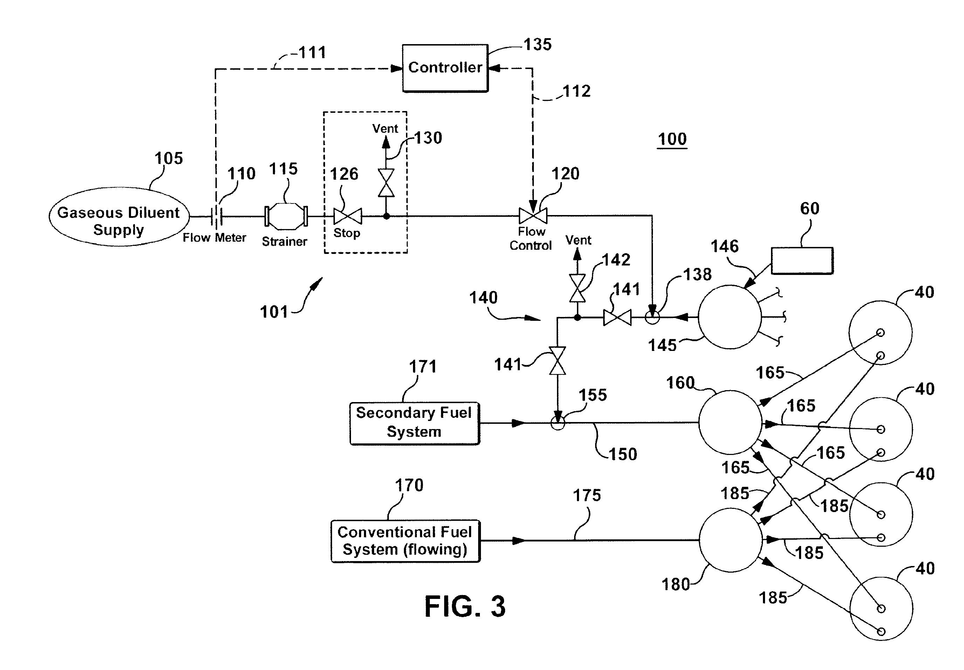

FIG. 3 illustrates a first embodiment of a gaseous diluent injection system 100 lined up to supply a gas turbine combustor through a secondary fuel path via a compressor discharge purge system. The diluent may be injected when a conventional fuel supply 170 is routed to the combustors 40 through a first fuel path 175 and the secondary fuel path 150 from secondary fuel supply 171 is not fueled. The conventional fuel is supplied to combustors 40 through the first fuel path 175 via conventional fuel manifold 180 and flexible fluid connectors 185. Four flexible fluid connectors 185 are illustrated, however, gas turbines will vary in the number of combustors 40 and hence the required number of these fluid connectors 185.

The gaseous diluent injection system 100 may provide a gaseous diluent flow control 101 that includes a gaseous diluent supply 105, a flow measurement instrument 110, a strainer 115 and a flow control valve 120. The flow measurement instrument 110 measures the flow of gaseous diluent and may provide a flow measurement signal 111 to a turbine control system 135. The flow control valve 120 controls the flow of gaseous diluent to the combustors in the proper proportion to the amount of and type of conventional fuel according to a control signal 112 from a turbine control system or control subsystem 135. Such control signals and turbine control system for adding diluent in proper amounts dependent on the gas turbine operating and fuel conditions are known. Vent lines and valves 130 may be provided for venting system piping during startup, shutdown and as necessary during operation.

A connection 138 is made from the gaseous diluent flow control 101 to the compressor discharge purge air piping 140 that may already exist for the system. The compressor discharge purge air piping 140 may include various stop valves 141 and vent valves 142. The compressor discharge purge air piping 140 accepts compressed air from a compressor discharge manifold 145 supplied from discharge 146 of gas turbine compressor 60. When gaseous diluent is injected, the gaseous diluent and the purge air jointly flow through the purge air piping 140. The purge air piping connects to existing secondary fuel system piping 150 at a location 155 that provides for isolation of the secondary fuel source 171. The gaseous diluent and purge air flow to secondary fuel manifold 160 and then through flexible connectors 165 to the individual combustors 40.

When the gaseous diluent injection system 100 is turned off, the flow control valve 120, the pressure control valve 125 and stop valve 126 may be closed to isolate the gaseous diluent from the purge air system and the lines may be vented. When the secondary fuel is supplying the combustor, the gaseous diluent control system 101 is off, and the control valve 120, the pressure control valve 125 and the stop valve 126 are closed to isolate the diluent injection system from the secondary fuel path. The purge air system may be further isolated from the secondary fuel path or may continue operation without the diluent injection system in operation.

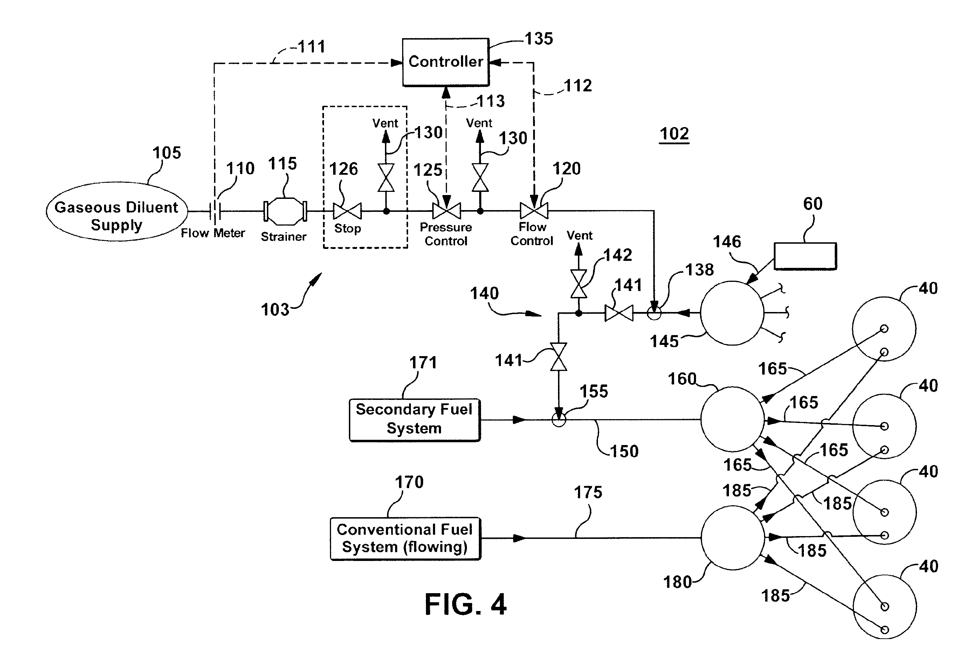

FIG. 4 illustrates a second embodiment of a gaseous diluent injection system 102 lined up to supply a gas turbine combustor through a secondary fuel path via a compressor discharge purge system. The diluent may be injected when a conventional fuel supply 170 is routed to the combustors 40 through a first fuel path 175. The conventional fuel is supplied through the first fuel injection path via conventional fuel manifold 180 and flexible fluid connectors 185. Four flexible fluid connectors 185 are illustrated, however, gas turbines will vary in the number combustors and hence the required number of these fluid connectors.

The gaseous diluent injection system 102 may provide a diluent flow control 103 that includes a gaseous diluent supply 105, a flow measurement instrument 110, a strainer 115 and a flow control valve 120. The flow measurement instrument 110 measures the flow of gaseous diluent and may provide a flow measurement signal 111 to a turbine control system 135. The flow control valve 120 controls the flow of gaseous diluent to the combustors in the proper proportion to the amount of and type of conventional fuel according to a control signal 112 from a turbine control system or control subsystem 135. Such control signals and turbine control system for adding diluent in proper amounts dependent on the gas turbine operating and fuel conditions are known. In addition to the flow control valve 120, a pressure control valve 125 may additionally be provided immediately upstream to control pressure at the flow control valve 120 for choked flow operation, thereby limiting the effect of downstream pressure on the flow control. Vent lines and valves 130 may be provided for venting system piping during startup, shutdown and as necessary during operation. A connection 138 is made from the diluent flow control 103 to the compressor discharge purge air piping 140 that may already exist for the system. The compressor discharge purge air piping 140 may include various stop valves 141 and vent valves 142. The compressor discharge purge air piping 140 accepts compressed air from a compressor discharge manifold 145 supplied from compressor discharge 146. When gaseous diluent is injected, the gaseous diluent and the purge air jointly flow through the purge air piping 140. The purge air piping 140 connects to existing secondary fuel system piping 150 at a location 155 that provides for isolation of the secondary fuel source 171. The gaseous diluent and purge air flow to secondary fuel manifold 160 and then through flexible connectors 165 to the individual combustors 40.

When the gaseous diluent injection system 102 is turned off, the flow control valve 120, the pressure control valve 125 and stop valve 126 may be closed to isolate the gaseous diluent from the purge air system and the lines may be vented. When the secondary fuel is supplying the combustor, the gaseous diluent control system 103 is off, the control valve 120, the pressure control valve 125 and the stop valve 126 are closed to isolate the diluent injection system from the secondary fuel path. Purge air system may be further be isolated from the secondary fuel path or may continue operation without the diluent injection system in operation.

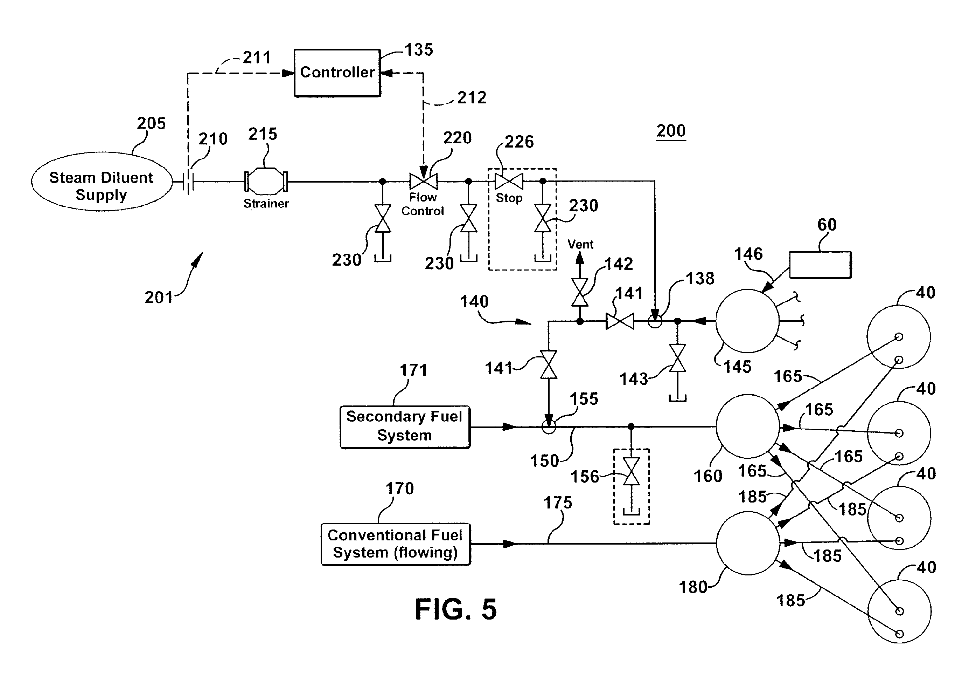

FIG. 5 illustrates a first embodiment of a steam diluent injection system 200 lined up to supply a gas turbine combustor through a secondary fuel path via a compressor discharge purge system. The diluent may be injected when a conventional fuel is supplied to the combustors through the conventional fuel path. The diluent may be injected when a conventional fuel supply 170 is routed to the combustors (40) through a first fuel path 175. The conventional fuel is supplied through the first fuel injection path via conventional fuel manifold 180 and flexible fluid connectors 185. Four flexible fluid connectors 185 are illustrated, however, gas turbines will vary in the number of combustors and hence the required number of these fluid connectors.

The steam diluent injection system 200 may provide a steam diluent flow control 201 that includes a steam diluent supply 205, a flow measurement instrument 210, a strainer 215 and a flow control valve 220. The flow measurement instrument 210 measures the flow of steam diluent and may provide such flow measure 211 to a turbine control system 135. The flow control valve 220 controls the flow of steam diluent to the combustors in the proper proportion to the amount of and type of conventional fuel according to a control signal 212 from a turbine control system 135. Such control signals and turbine control system for adding diluent in proper amounts dependent on the gas turbine operating and fuel conditions are known. Drain lines and valves 230 may be provided for draining condensate from system piping during startup, shutdown and as necessary during operation.

A connection 138 is made from the diluent flow control 201 to the compressor discharge purge air piping 140 that may already exist for the system. The compressor discharge purge air piping 140 may include various stop valves 141, vent valves 142 and drain valves 143. The compressor discharge purge air piping 140 accepts compressed air from a compressor discharge manifold 145 supplied from compressor discharge 146. When steam diluent is injected, the steam diluent and the purge air jointly flow through the purge air piping 140. The purge air piping connects to existing secondary fuel system piping 150 at a location 155 that provides for isolation of the secondary fuel source 171. The steam diluent and purge air flow to secondary fuel manifold 160 and then through flexible connectors 165 to the individual combustors 40. One or more drain valves 156 may be included in the secondary fuel path to allow for draining condensate.

When the steam diluent injection system 200 is turned off, the control valve 220, the pressure control valve 225 and stop valve 226 may be closed to isolate the steam diluent from the purge air system 140 and the drain lines 230 may be drained to remove condensed steam. When the secondary fuel is supplying the combustor, the steam diluent injection system 200 is off, the control valve 220, the pressure control valve 225 and the stop valve 226, 141 are closed to isolate the diluent injection system and the purge air system from the secondary fuel path, and the lines 230 may be drained to removed condensed steam.

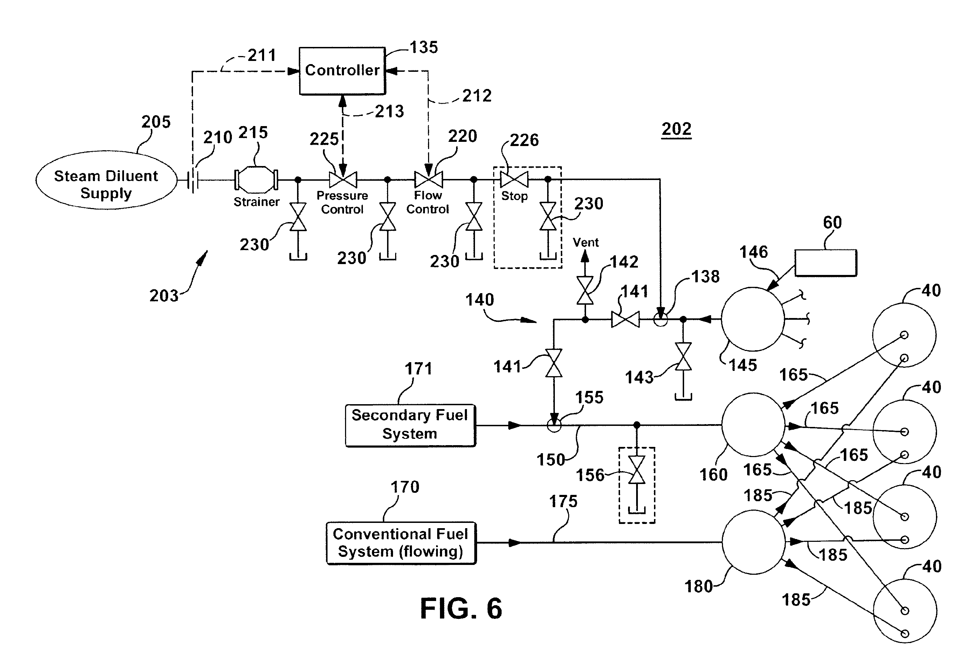

FIG. 6 illustrates a second embodiment of a steam diluent injection system 202 lined up to supply a gas turbine combustor through a secondary fuel path via a compressor discharge purge system. The diluent fluid may be injected when a conventional fuel is supplied to the combustors through the conventional fuel path. The diluent fluid may be injected when a conventional fuel supply 170 is routed to the combustors 40 through a first fuel path 175. The conventional fuel is supplied through the first fuel injection path via conventional fuel manifold 180 and flexible fluid connectors 185. Four flexible fluid connectors 185 are illustrated, however, gas turbines will vary in the number combustors and hence the required number of these fluid connectors.

The steam diluent injection system 202 may provide a steam diluent flow control 203 that includes a steam diluent supply 205, a flow measurement instrument 210, a strainer 215 and a flow control valve 220. The flow measurement instrument 210 measures the flow of steam diluent and may provide such flow measure 211 to a turbine control system 135. The flow control valve 220 controls the flow of steam diluent to the combustors 40 in the proper proportion to the amount of and type of conventional fuel according to a control signal 212 from a turbine control system 135. Such control signals and turbine control system for adding diluent in proper amounts dependent on the gas turbine operating and fuel conditions are known. In addition to the flow control valve 220, a pressure control valve 225 may additionally be provided immediately upstream to control pressure for choked flow operation, thereby limiting the effect of downstream pressure on the flow control. Drain lines and valves 230 may be provided for draining condensate from system piping during startup, shutdown and as necessary during operation.

A connection 138 is made from the diluent flow control 201 to the compressor discharge purge air piping 140 that may already exist for the system. The compressor discharge purge air piping 140 may include various stop valves 141, vent valves 142 and drain valves 143. The compressor discharge purge air piping 140 accepts compressed air from a compressor discharge manifold 145 supplied from compressor discharge 146. When steam diluent is injected, the steam diluent and the purge air jointly flow through the purge air piping 140. The purge air piping connects to existing secondary fuel system piping 150 at a location 155 that provides for isolation of the secondary fuel source 171. The steam diluent and purge air flow to secondary fuel manifold 160 and then through flexible connectors 165 to the individual combustors 40. One or more drain valves 156 may be included in the secondary fuel path to allow for draining condensate.

When the steam diluent injection system 202 is turned off, the control valve 220, the pressure control valve 225 and stop valve 226 may be closed to isolate the steam diluent from the purge air system 140 and the drain lines 230 may be drained to remove condensed steam. When the secondary fuel is supplying the combustor, the steam diluent injection system 202 is off. The control valve 220, the pressure control valve 225 and the stop valves 226, 141 are closed to isolate the diluent injection system and the purge air system from the secondary fuel path, and the lines 230 may be drained to removed condensed steam.

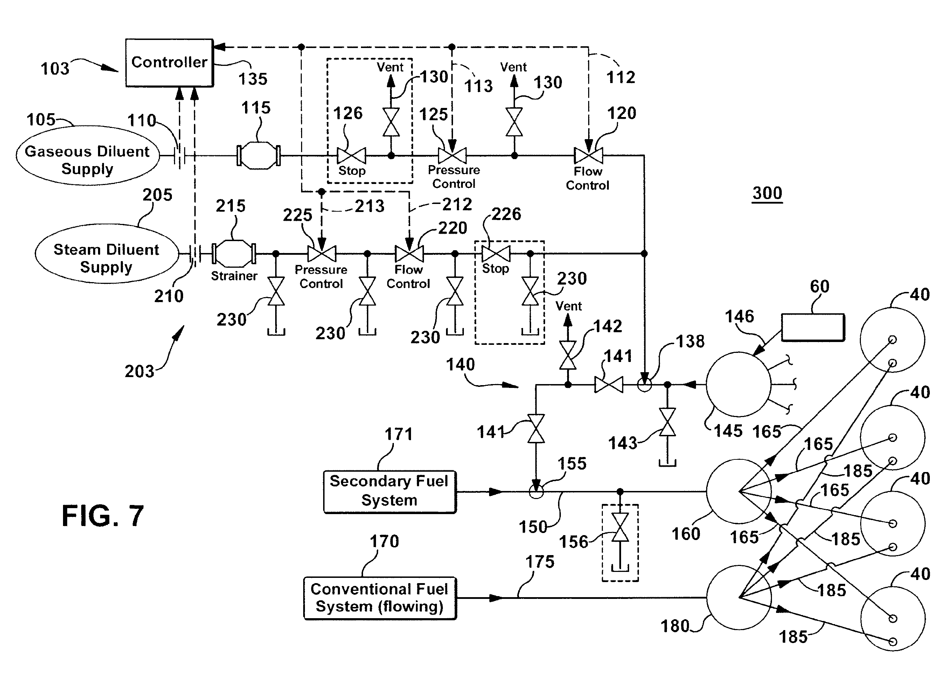

It should be understood that both a gaseous diluent control system 103, as previously described for FIG. 4, and a steam diluent control system 203, as previously described for FIG. 6, may be employed in parallel configuration for connection to the compressor discharge purge air piping 140 such that either diluent type may be injected separately or both diluent types may be injected jointly. FIG. 7 illustrates an embodiment of a diluent injection system that includes a gaseous diluent control system 103 and a steam diluent control system 203 that may be fluidly connected in parallel and connect with the compressor discharge purge air piping 140 at 138 to supply one or both type diluents to the combustors 40 of the gas turbine (not shown) through the secondary fuel path 150 and the secondary fuel manifold 160. The gaseous diluent control system 103 includes a pressure control valve 125 for providing choked flow operation in parallel with steam diluent control system 203 that includes a pressure control valve 225 for choked flow operation. It should be understood that one or both of the diluent control systems operating in parallel may not include the pressure control valve 125, 225 and may not operate with choked flow at the inlet to the control valve 120, 220.

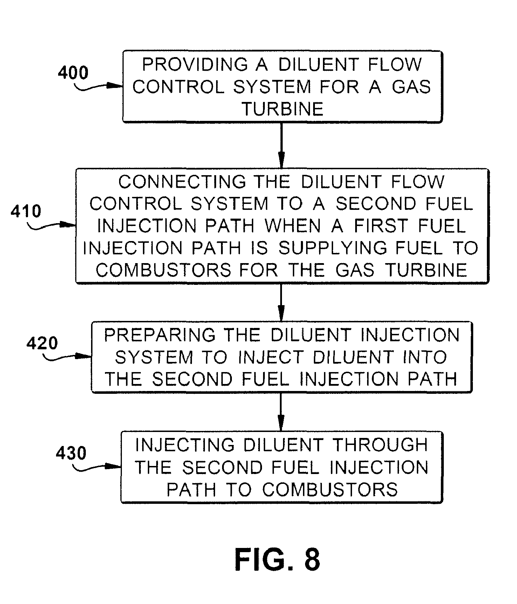

According to another aspect of the invention, a method is provided for supplying a diluent to combustors of a gas turbine for a gas turbine system that does not supply a dedicated flow path or injection point to the combustors for the diluent fluid. Such a system may include a primary fuel flow path to the combustor through a first fuel manifold and a secondary fuel flow path to the combustor through a secondary manifold. FIG. 8 illustrates a flowchart for the method of supplying diluent to the combustors for such a gas turbine system. Step 400 includes providing a diluent flow control system for a gas turbine. Step 410 provides connecting the diluent flow control system to a second fuel injection path when a first fuel injection path is supplying fuel to the combustors for the gas turbine. Step 420 prepares the diluent injection system to inject diluent into the second fuel injection path. Step 430 includes injecting diluent through the second fuel injection path to the combustors.

Such a system may include a compressor discharge purge air system that connects to one or more of the primary manifold and the secondary manifold for purging the associated manifold and fuel nozzle when the manifold is not supplying fuel to the combustor.

The method includes providing a diluent flow control system. The diluent flow control system being provided may be a flow control system for a gaseous diluent, such as N2 or CO2 or may be a flow control system for a steam diluent. The diluent control system may provide a control system for both steam diluent and gaseous diluent such that the steam diluent or the gaseous diluent may be added individually or added both may be added jointly. Providing a diluent flow control system may include providing a diluent supply, a controller controlling a flow of diluent to the combustors, a flow measurement instrument for measuring diluent flow, and a flow control valve adapted for controlling the flow of diluent to the combustors. The step of providing may also include providing a pressure control valve, adapted for controlling pressure at the flow control valve for choked flow at the flow control valve.

The method further includes connecting the diluent flow control system to a second fuel injection path where the second fuel injection path is not supplying fuel to the combustor. Connecting the diluent flow control system to the second fuel injection path to the combustors may include making a fluid connection with an existing plant system connected to the secondary fuel injection path. The initial mechanical connection may be made with known mechanical joining techniques. The existing fluid system communicating with the fuel injection path may be the purge air piping from the compressor discharge header. For an embodiment that is to provide both steam diluent and gaseous diluent together, the mechanical connection must provide for fluidly connecting both flow control systems to be tied in parallel to the existing plant system in fluid communication with the secondary fuel injection path.

Preparing for startup of the system may involve operating valves manually or under remote control to connect the diluent source with the compressor discharge purge air piping. Drain valves may be provided in the system for draining condensed steam from low point drains during at least one of warmup, operation and shutdown of the steam diluent flow control system. Vent valves may be provided for venting gaseous diluent or air in the system during startup, shutdown and operation of the gaseous diluent flow control system.

The method for injecting diluent from the diluent control system through the second fuel injection path when the second fuel injection path is not being used to supply fuel to the combustor may include determining a required diluent flow for the gas turbine operating conditions. Such determination may be made for a turbine controller or a subsystem thereof. The method may further include monitoring diluent flow with a flow-measurement instrument that may provide the measured flow value to the controller. The controller may then provide control signals to the flow control valve for establishing the correct diluent flow. The method may further include establishing pressure at the inlet to the flow control valve with a pressure control valve so as to provide choked flow conditions.

The method may provide for injecting a diluent into a combustor when the fuel supplied to the first injection path is one of natural gas and distillate oil and the fuel supplied to the second fuel injection path includes synthetic gas or process gas.

While various embodiments are described herein, it will be appreciated from the specification that various combinations of elements, variations or improvements therein may be made, and are within the scope of the invention.

For completeness, various aspects of the invention are now set out in the following numbered clauses:
1. A method for injecting a diluent into a combustor for a gas turbine, with a first fuel injection path and a second fuel injection path, to the combustor that does not include a dedicated diluent injection point in the combustor, the method comprising:
   providing a diluent flow control system;
   connecting the diluent flow control system to a second fuel injection path wherein the first fuel injection path is supplying fuel to the combustor and the second fuel injection path is not supplying fuel to the combustor;
   preparing the diluent flow control system to inject the diluent into the second fuel injection path; and
   injecting diluent from the diluent control system through the second fuel injection path to the combustor.
2. The method for injecting a diluent into a combustor for a gas turbine according to clause 1, the step of providing a diluent flow control system comprising:
   providing a diluent supply for of one of an inert gaseous diluent and a steam diluent;
   providing a controller controlling a flow of a diluent to the combustors;
   providing a flow measurement instrument for measuring diluent flow; and
   providing a flow control valve adapted for controlling flow of the diluent.
3. The method for injecting a diluent into a combustor for a gas turbine according to clause 1, the step of providing a diluent flow control system further comprising:
   providing a pressure control valve upstream from the flow control valve; and
   controlling pressure at the inlet to the flow control valve to establish a choked flow.
4. The method for injecting a diluent into a combustor for a gas turbine according to clause 1, the step of connecting comprising:
   establishing a fluid connection between the diluent flow control system and a turbine fluid system in fluid communication with the second fuel injection path when the second fuel injection path is inactive.
5. The method for injecting a diluent into a combustor for a gas turbine according to clause 1, the step of connecting comprising:
   tieing an outlet of a steam diluent flow control system and a gas diluent flow control system operating in parallel into existing system piping of the gas turbine, wherein the existing system piping is in fluid communication with the second fuel injection path not supplying fuel to the combustor.
6. The method for injecting a diluent into a combustor for a gas turbine according to clause 4 wherein the turbine system in fluid communication with the secondary fuel injection path comprises a compressor discharge purge air system.
7. The method for injecting a diluent into a combustor for a gas turbine according to clause 1, wherein the step of preparing for the diluent flow control system comprises:
   lining up isolation valves manually or by remote control to inject diluent into the secondary fuel injection path.
8. The method for injecting a diluent into a combustor for a gas turbine according to clause 1, wherein the step of preparing for the diluent flow control system comprises at least one of:
   draining condensed steam from low point drains during at least one of warmup, operation and shutdown of the diluent flow control system; and
   venting gaseous diluent during startup and shutdown of the diluent flow control system.
9. The method for injecting a diluent into a combustor for a gas turbine according to clause 1, the step of injecting comprising:
   determining required diluent flow for gas turbine operating conditions;
   monitoring diluent flow with a flow measurement instrument; and
   regulating diluent flow with a flow control valve.
10. The method for injecting a diluent into a combustor for a gas turbine according to clause 9, the step of the step of injecting further comprising:
   controlling pressure at the inlet to the flow control valve with a pressure control valve for choked flow operation.
11. The method for injecting a diluent into a combustor for a gas turbine according to clause 1, wherein the first fuel injection path is a normal fuel injection path for one of natural gas and distillate oil.
12. The method for injecting a diluent into a combustor for a gas turbine according to clause 1, wherein the second fuel injection path is a secondary fuel injection path for one of synthetic gas and natural gas.
13. A system for injecting a diluent into a combustor for a gas turbine with a first fuel injection path and a second fuel injection path to the combustor that does not include a dedicated diluent injection point in the combustor nozzle, the system comprising:
   a diluent supply;
   a plurality of combustors of a gas turbine;
   a control system for diluent injection into the combustors;
   a first fuel path for a conventional fuel to the combustors;
   a second fuel path for a secondary fuel to the combustors; and
   a fluid connection between the control system for diluent injection and the second fuel path to the combustors.
14. The system according to clause 13, wherein the diluent injection system includes at least one of a steam diluent injection system and a gaseous diluent injection system.
15. The system according to clause 14, the control system for diluent injection comprising:
   a diluent flow control valve.
16. The system according to clause 15, the control system for diluent injection comprising:
   a pressure regulating valve controlling pressure at the flow control valve for choked flow operation.
17. The system according to clause 13, wherein the fluid connection comprises an existing gas turbine system fluidly connected to the second fuel path to the combustors.
18. The system according to clause 17, wherein the fluid connection of the existing gas turbine system comprises a compressor air purge system fluidly connected to the second fuel path to the combustors.
19. The system according to clause 18, comprising both a steam diluent control system and a gaseous diluent control system fluidly connected in parallel, downstream from the flow control valve in the steam diluent control system and the flow control valve in the gaseous diluent control system, to the second fuel path through a compressor air purge system.
20. The system according to clause 17, wherein the control system includes a plurality of drain valves for draining condensed steam for the steam diluent control system and a plurality of vent valves for venting gaseous diluent for the gaseous diluent control system.

## Claims

1. A method for injecting a diluent (105) into a gas turbine combustor (40) with a first fuel injection path (175) and a second fuel injection path (150) to the combustor (40) that does not include a dedicated diluent injection point in the combustor, the method comprising:
providing a diluent flow control system (100);
connecting the diluent flow control system (100) to a second fuel injection path (150) wherein the first fuel injection path (175) is supplying fuel (170) to the combustor (40) and the second fuel injection path (150) is not supplying fuel (171) to the combustor (40);
preparing the diluent flow control system (100) to inject the diluent (105) into the second fuel injection path (150); and
injecting diluent (105) from the diluent flow control system (100) through the second fuel injection path (150) to the combustor (40).

2. The method for injecting a diluent (105, 205) into a gas turbine combustor (40) according to claim 1, the step of providing a diluent flow control system (100) comprising:
providing a diluent supply (105, 205) for of one of an inert gaseous diluent and a steam diluent;
providing a controller (135) controlling a flow of a diluent to the combustors (40);
providing a flow measurement instrument (110, 210) for measuring flow of diluent (105, 205); and
providing a flow control valve (120, 220) adapted for controlling flow of the diluent (105, 205).

3. The method for injecting a diluent (105, 205) into a gas turbine combustor (40) according to claim 1 or 2, the step of providing a diluent flow control system (300) further comprising:
providing a pressure control valve (125, 225) upstream from the flow control valve (120, 220); and
controlling pressure (125, 225) at the inlet to the flow control valve (120, 220) to establish a choked flow.

4. The method for injecting a diluent (105, 205) into a gas turbine combustor (40) according to any of the preceding claims, the step of connecting comprising:
establishing a fluid connection (138) between the diluent flow control system (103, 203) and a turbine fluid system (140) in fluid communication with the second fuel injection path (150) when the second fuel injection path is inactive.

5. The method for injecting a diluent (105, 205) into a gas turbine combustor (40) according to claim 4, wherein the turbine fluid system (140) in fluid communication with the secondary fuel injection path (150) comprises a compressor discharge purge air system connecting at (155).

6. The method for injecting a diluent (105, 205) into a gas turbine combustor (40) according to any of the preceding claims, the step of connecting comprising:
connecting an outlet of a gas diluent flow control system (103) and a steam diluent flow control system (203) operating in parallel into existing turbine system piping (140), wherein the existing turbine system piping is in fluid communication with the second fuel injection path (150) not supplying fuel to the combustor (40).

7. The method for injecting a diluent (105, 205) into a gas turbine combustor (40) according to any of the preceding claims, the step of injecting comprising:
determining a required flow of diluent (105, 205) for gas turbine operating conditions;
monitoring the flow of diluent (105, 205) with a flow measurement instrument (110, 210); and
regulating flow of diluent (105, 205) with a flow control valve (120, 220).

8. The method for injecting a diluent (105, 205) into a gas turbine combustor (40) according to claim 7, the step of the step of injecting further comprising:
controlling pressure at the inlet to the flow control valve (120, 220) with a pressure control valve (125, 225) for choked flow operation.

9. The method for injecting a diluent (105, 205) into a gas turbine combustor (40) according to any of the preceding claims, wherein the first fuel injection path (175) is a normal fuel injection path for one of natural gas and distillate oil.

10. The method for injecting a diluent (105, 205) into a gas turbine according to any of the preceding claims, wherein the second fuel injection path (150) is a secondary fuel injection path for one of synthetic gas and natural gas.

11. A system for injecting a diluent into a combustor for a gas turbine with a first fuel injection path and a second fuel injection path to the combustor that does not include a dedicated diluent injection point in the combustor nozzle, the system comprising:
a diluent supply;
a plurality of combustors of a gas turbine;
a control system for diluent injection into the combustors;
a first fuel path for a conventional fuel to the combustors;
a second fuel path for a secondary fuel to the combustors; and
a fluid connection between the control system for diluent injection and the second fuel path to the combustors.

12. The system according to claim 11, wherein the diluent injection system includes at least one of a steam diluent injection system and a gaseous diluent injection system.

13. The system according to claim 12, the control system for diluent injection comprising:
a diluent flow control valve.

14. The system according to claim 13, the control system for diluent injection comprising:
a pressure regulating valve controlling pressure at the flow control valve for choked flow operation.

15. The system according to any of claims 11 to 14, wherein the fluid connection comprises an existing gas turbine system fluidly connected to the second fuel path to the combustors.
